# EUROPEAN PATENT APPLICATION

(11) **EP 4 422 168 A1**
(43) Date of publication of application: **28.08.2024**
(21) Application number: 23157943.4
(22) Date of filing: 22.02.2023
(51) Int. Cl.: H04N 7/18, H04N 7/14, G03B 17/56

(54) **COMMUNICATION SYSTEM FOR PEOPLE WITH IMPAIRMENTS, METHOD OF OPERATING A COMMUNICATION SYSTEM, AND DATA CARRIER**

(71) Applicant: Wiedemann, Mirko, 82049 Pullach (DE); Levy, Joshua Nathan James, 82008 Unterhaching (DE)
(72) Inventor: Wiedemann, Mirko, 82049 Pullach (DE); Levy, Joshua Nathan James, 82008 Unterhaching (DE)
(74) Representative: Hoffmann Eitle

(57) **Abstract**

This disclosure relates to a communication system for providing a person, such as a person with an impairment, an elderly, or handicapped person, with remote assistance. The communication system comprises a communication device, comprising an audio output unit, an input unit for receiving user commands, a microphone, a display unit, a network unit, a memory unit for storing an operating system, and a data processing unit, the communication device being configured to communicate with a remote server system and configured to support video calls via the remote server system; a camera unit, wherein the camera unit and the communication device are structurally separate entities, the camera unit being connected or connectable to the communication device in a wireless manner or by wire; and at least one item selected from the group consisting of a wearable, an adapter for being attached to a wearable and/or the human body, and a stand; the at least one item comprising a holding means. The camera unit comprises a coupling means for being releasably coupled to the holding means, the coupling means and the holding means are configured to be releasably mated for holding the camera unit attached to the holding means

## Description

### Technical Field

The present disclosure relates to a communication system for people with impairments that require remote assistance, such as, e.g., elderly or handicapped people.

The disclosure also relates to a method of operating such a communication system and to a data carrier with software stored thereon for running the communication system and, possibly, other devices including a remote server system.

### Technical Background

In many of nowadays societies, there are a large number of elderly people that sporadically need assistance from someone else in their daily lives. With increasing age, many elderly people encounter difficulties in mastering particular tasks, e.g., when filling out forms, ordering things, responding to inquiries, understanding why something does not work, etc. Not all such difficulties are simply associated with physical problems in completing tasks so that it would be necessary for someone to visit the person and help them physically in completing the task. Many difficulties in fact arise due to challenges in keeping up with the rapid development of modern technology. Such difficulties may of course be particularly pronounced when individuals suffer particular ailments such as Alzheimer's disease, Parkinson's disease, dementia, stroke, and/or brain injury, and the like. However, also without the presence of such ailments, many elderly people have problems in operating electronic devices.

Moreover, independent of age, there is a part of the population living with some impairment, disablement, or, more generally speaking, with some form of deviation of what is perceived as a norm. Such deviations may involve various autism spectrum disorders (ASD), cognitive deficits, social problems, memory problems, attention deficits, and the like.

The manifestations of different types of impairments may take on entirely different forms, but what may be considered a common feature to many impairments is that some level of assistance from a family member, a friend, or a caregiver may be particularly helpful or even absolutely necessary, in order for an individual to be able to master daily challenges.

People with impairments may have to cope with health issues, emotional swings, everyday adjustments to new environments and situations, and, in particular, performing tasks relying on new technology with which the person in question is not or at least not sufficiently familiar with.

Many people living with an impairment are nevertheless entirely capable of living rather independent lives, but they may punctually need assistance in very particular situations. Such situations may occur scattered throughout the day or week and may occur rather unexpectedly. They may range, for example, from ordering something online with a computer, filling out form sheets associated with state affairs or with the health system, answering an inquiry from someone, making a phone call, entering a PIN code, changing a PIN code, making the modem work again, choosing a product in a store, communicating with a stranger at the door, and the like. In other words, challenging situations may arise at home or anywhere else. In addition, people with impairments may experience isolation as they do not feel sufficiently integrated in society.

A possibility to provide assistance to people with impairments of course lies in a family member, a friend, or a caregiver periodically or sporadically (e.g., on demand) visiting the person requiring assistance from time to time. However, this may not always be satisfying as assistance is not regularly available when it is needed, as there is a waiting time, and as it is logistically inefficient to be dependent on the physical presence of the person providing the assistance.

Nowadays technology of course does involve the possibility of relying on common accessories such as mobile phones, computers, and the like. However, many people with impairments may encounter difficulties in operating such equipment. Alternatively, operating the equipment may be fine for a while, but as soon as a small problem arises, the user may be stuck. For example, many elderly people perceive it as challenging to operate a smart phone or to communicate with a computer at home. Some elderly people regularly get stuck when trying to start up a computer or a smart phone, e.g., because they forget a password or which icon to press, etc.

There is, hence, a desire to address at least one of the above-mentioned shortcomings. It would also be convenient to have equipment suited to improve the daily life of people with impairments.

### Summary

Aspects of the above-mentioned object are achieved by a communication system for providing a person, such as a person with an impairment, an elderly person, and/or handicapped person, with remote assistance in accordance with the present disclosure.

The communication system comprises a communication device. The communication device may comprise any one or several of: an audio output unit, an input unit for receiving user commands, a microphone, a display unit, a network unit, a memory unit for storing an operating system, and a data processing unit.

The audio output unit may enable audio signals and/or messages to be output to the user to inform the user. The input unit may comprise or consist of the microphone. Alternatively, the input unit may be provided in addition to the microphone and may, e.g., be suited to be operated by hand. The display unit may be a touch screen. In this case, the touch screen may also constitute or be comprised by the input unit.

The data processing unit may allow to perform data processing operations, such as running software stored on the memory unit and/or processing input data input by the user and/or data received via the network unit.

The network unit may enable a communication over a network (e.g., the internet) and may thus be configured for communication with a remotely located server unit and/or with other units. The remotely located server unit may comprise one or several servers which may be located in the same or in different locations.

The communication device may be a portable communication device. This may be particularly convenient, as the user can also take it along and use it in different locations (e.g., while shopping, traveling, etc.).

The communication device may be configured to communicate with a remote server system and configured to support video calls via the remote server system. This may allow a person with an impairment, such as an elderly person, to communicate with someone else relying on a network, wherein calls may be hosted by the remote server system or by another server. The remote server system or the another server may support a voice-over-IP service and/or a cross-platform centralized instant messaging, and the like.

The communication device may comprise a camera unit, wherein the camera unit and the communication device are structurally separate entities, the camera unit being connected or connectable to the communication device in a wireless manner or by wire.

As the camera unit and the communication device are separate structural entities, this may allow the user to change the relative positions and orientations between the camera unit and the communication device. In particular, the user may, hence, change the position of the camera unit while communicating with a remotely located person (e.g., a family member, a friend, or a caregiver etc.) and thus change what the person at the other end will see. In particular, the user may shift back and forth between a face-to-face conversation and a state in which the user shows the other person something with the camera (e.g., an object or situation creating difficulties). Specifically, the user can also show a first-person perspective using the camera unit with ease. These changes of position of the camera, however, do not necessitate a change of position of the communication device. This way, a person seeking assistance may, e.g., keep the communication device in a convenient position (e.g., standing on a table) in which the person at the other end remains conveniently visible on the display unit, while changing the perspective of the image shown to the person at the other end of the call.

Specifically, the camera unit may be moved into a position such that a perspective of a situation, as perceived from the user of the communication system, may be transmitted to the person providing assistance. In other words, a first-person perspective view of a situation may be transmitted to the person providing assistance. For example, the camera unit may be brought into a position close to any body part of the user, e.g., close to the face, to the neck, or on top of the head, with a camera of the unit directed at an object of interest.

The connection or connectibility between the camera unit and the communication device by wire may offer the advantage that the loss of a component and/or the unintentional leaving behind a part of the communication system may be prevented. For example, an elderly person may not run the risk of losing the camera unit or of at least not finding it at a time of need, if the wire consistently connects it to the communication device.

A wireless connection or connectibility between the camera unit and the communication device may offer the benefit of greater versatility. In this case, the user may, for example, conveniently take the communication device and/or the camera unit along as separate structural entities, respectively, and may conveniently store them in a small space (e.g., the camera unit in a jacket pocket, etc.).

The communication system may comprise at least one item selected from the group consisting of a wearable, an adapter for being attached to a wearable and/or the human body, and a stand. The at least item, which is comprised and thus part of the communication system, comprises a holding means.

The communication system may comprise two or three of the mentioned categories of items and/or more may comprise than one of the items of any of the mentions categories of items. For example, the communication system may include several types of wearables and/or adapters.

The holding means of the at least one item is structurally compatible with the camera unit, as follows. The camera unit may comprise a coupling means for being releasably coupled to the holding means, and the coupling means and the holding means may be configured to be releasably mated for holding the camera unit attached to the holding means.

This way, the holding means may provide for a very convenient way of putting the camera unit in a stable position.

The wearable may have the benefit of enabling the camera unit to be mounted at a position close to the body of the user when the user wears the wearable. The wearable may, e.g., be a wearable configured to be worn on or close to a user's head.

The wearable may be a wearable configured to worn on an arm or a leg of a user. The wearable may be a wearable configured to be worn around any upper or lower body part. For example, the wearable may be a belt-like wearable.

A wearable may be particularly convenient to offer a camera position and orientation that allows for a remotely located person to gain a good look at a situation in which the assistance is required. For example, the camera may be mounted to a wearable configured to be worn on a user's head, and a first-person perspective may be provided by the camera orientation in the mounted position.

The adapter may have the benefit that a wearable or another part of the human body may be conveniently turned into a mounting position for the camera unit. For example, a shirt, a pullover, trousers, a shirt, glasses, a hat, a wrist, an ankle, an arm, a neck, or the like may be provided with the adapter, and the camera unit may then be mounted to the adapter.

The stand may provide the benefit that the camera unit may be mounted stably in a particularly convenient location chosen by the user. The location is also variable by changing the position of the stand. The convenience for a person requiring assistance, such as an elderly person, may thus by far exceed the convenience by locating the camera unit at the communication device, and, even more so, as compared to devices with inbuilt cameras (such as smart phones). The stand may in addition be configured to shapeshift and the like, thus further increasing the versatility for the user in terms of where the camera unit can be conveniently located and which camera orientations can be conveniently realized.

The combination of the communication device, the camera unit, and the at least one item comprising the holding means, may be particularly convenient for a person requiring assistance, such as an elderly person, as the switch between a smartphone or tablet-like experience in which the camera unit points towards the face of the user and shows the person at the other end the face of the user during video calls, and the first-person view, or any other view that will enable the remotely located person to gain a good look at the situation in which assistance is needed, e.g., from the perspective of the help seeking person, may be effected very efficiently. Multiple changes back and forth between different views can be carried out by the user in an intuitive and failsafe manner.

Aspects of the present disclosure relate to a communication system for providing a person, such as an elderly or handicapped person, with remote assistance, wherein the communication system comprises a communication device, optionally a portable communication device, comprising an audio output unit, an input unit for receiving user commands, a microphone, a display unit, such as a touch screen, a network unit, a memory unit for storing an operating system, and a data processing unit, the communication device being configured to communicate with a remote server system and configured to support video calls via the remote server system, and a camera unit, wherein the camera unit and the communication device are structurally separate entities, the camera unit being connected or connectable to the communication device in a wireless manner or by wire. The descriptions of aspects and features and/or benefits of the communication device and the camera unit, are all analogously separately or in combination applicable to this aspect.

The communication device may comprise a holding means, and the camera may comprise a coupling means for being releasably coupled to the holding means. The coupling means and the holding means may be configured to be releasably mated for holding the camera unit attached to the holding means.

The holding means of the communication device is structurally compatible with the camera unit, as follows. The camera unit may comprise a coupling means for being releasably coupled to the holding means, and the coupling means and the holding means may be configured to be releasably mated for holding the camera unit attached to the holding means.

This way, the holding means may provide for a very convenient way of placing the camera unit at a position associated with the communication device. This may provide a convenient user experience during videocalls.

This aspect may be combined with the former aspect described hereabove. In other words, this aspect may be combined with any one or several of the items including one or several wearables, adapters, and/or stands as described above.

According to some embodiments in accordance with any of the aforementioned aspects (or combinations thereof), the camera unit and the communication device may be configured to communicate via wire or via wireless connection, such as wi-fi or Bluetooth.

Aspects of the present disclosure relate to a set of equipment for a communication system for providing a person, such as an elderly or handicapped person, with remote assistance, wherein the communication system comprises a camera unit that is configured to be connected to a structurally separate communication device in a wireless manner or by wire; and at least one item selected from the group consisting of a wearable, an adapter for being attached to a wearable and/or the human body, and a stand; the at least one item comprising a holding means, wherein the camera unit may comprise a coupling means for being releasably coupled to the holding means, the coupling means and the holding means being configured to be releasably mated for holding the camera unit attached to the holding means.

The set of equipment may be configured to be operated together with a communication device (not part of this system, e.g., a smartphone, a computer, a tablet and the like) and may alternatively also be referred to as a communication system add-on. Thus, all of the following statements may be understood to also relate to a communication system add-on (in the sense that the communication system may be considered complete when combining the set of equipment with a communication device).

The set of equipment may comprise two or three of the items, and/or more than one of the items of any of the mentions categories of items.

The holding means of the at least one item is structurally compatible with the camera unit, as follows. The camera unit may comprise a coupling means for being releasably coupled to the holding means, and the coupling means and the holding means may be configured to be releasably mated for holding the camera unit attached to the holding means.

This way, the holding means may provide for a very convenient way of putting the camera unit in place.

The wearable may have the benefit of enabling the camera unit to be mounted at a position close to the body of the user when the user wears the wearable. The wearable may, e.g., be a wearable configured to be worn on or close to a user's head. The wearable may be a wearable configured to worn on an arm or a leg of a user. The wearable may be a wearable configured to be worn around any upper or lower body part. For example, the wearable may be a belt-like wearable. A wearable may be particularly convenient to offer a camera position and orientation that allows for a remotely located person to gain a good look at a situation in which the assistance is required. For example, the camera may be mounted to a wearable configured to be worn on a user's head, and a first-person perspective may be provided by the camera orientation in the mounted position.

The adapter may have the benefit that a wearable or another part of the human body may be conveniently turned into a mounting position for the camera unit. For example, a shirt, a pullover, trousers, a shirt, glasses, a hat, a wrist, an ankle, an arm, a neck, or the like may be provided with the adapter, and the camera unit may then be mounted to the adapter.

The set of equipment may allow a user to conveniently bring along one or several components, in order to turn a communication device, such as a smart phone, a tablet, or a computer into a communication system which will offer benefits in accordance with aspects discussed above.

The stand may provide the benefit that the camera unit may be mounted stably in a particularly convenient and variable location chosen by the user. The convenience for a person requiring assistance, such as an elderly person, may thus by far exceed the convenience by locating the camera unit at a communication device, and, even more so, as compared to stand-alone devices with inbuilt cameras (such as smart phones). The stand may in addition be configured to allow for changing its shape, thus further increasing the versatility for the user in terms of where the camera unit can be conveniently located and which camera orientations can be conveniently realized.

According to some embodiments of any of the aspects of the communication system or to some embodiments of the set of equipment, the communication system or the set of equipment comprises a set of docking components, wherein each component of the set of docking components comprises a holding means that is configured to be releasably coupled with the coupling means of the camera unit for holding the camera unit attached to the holding means. The holding means of all of the components are structurally compatible in the sense that the camera unit is alternatively releasably mated with any one of the holding means.

The set of docking components may comprise at least two items selected from the list consisting of: the communication device, the wearable, the adapter, and the stand. The set of docking components may comprise three or more items and may comprise one or several of each type of item.

The set of docking components may allow for an extremely convenient and versatile switching around between different positions of the camera unit and may be easy to handle also by a person with an impairment. For example, an elderly person may be able to change the position of the camera intuitively and with ease even if other common technologies may be too challenging, such as, e.g., using a smart phone and pressing the screen to change the camera from front to back side, and holding the smart phone with different angles and orientations while conversing with someone.

According to some embodiments of any of the aspects of the communication system or to some embodiments of the set of equipment, the coupling means may be configured to be releasably coupled to the holding means by a mechanical engagement, such as a clipping engagement, a frictional engagement, a threaded engagement.

This may offer a particularly convenient and fast way of docking and undocking for the camera. One movement with one hand may suffice. The couplings may be very easily and intuitively engaged and disengaged.

According to some embodiments of any of the aspects of the communication system or to some embodiments of the set of equipment, one of the coupling means and the holding means comprises a magnetic part and the other one of the coupling means and the holding means comprises a magnetic counterpart, wherein the magnetic part and the magnetic counterpart are configured to be held together by a magnetic force.

The magnetic coupling and decoupling may be particularly convenient, intuitive, and fast. Also people with impairments may be capable of very conveniently handling such an engagement/disengagement mechanism.

According to some embodiments of any of the aspects of the communication system or to some embodiments of the set of equipment, the magnetic part and the magnetic counterpart are configured such that only one or only two mutual coupling orientations with respect to one another are possible/enabled. This limitation of the number of orientations may be imposed by virtue of the choice of alternating pole orientations of the respective magnet-pairs.

This may ensure an intended coupling orientation and/or a stable coupling.

According to some embodiments of any of the aspects of the communication system or to some embodiments of the set of equipment, the stand comprises an elongated deformable element configured to be shape-deformed to change the position of the holding means relative to other parts of the stand.

The stand may at least partially be configured with a stiffness that keeps the stand in a particular shape after a deformation, so that the user can change the shape, with the shape remaining as selected by the user.

The stand may, for example, be deformed analogously as the stand of some desktop lamps. The stand may be configured to be curved or straight, or partially curved. Thus, a docketing position may be provided in a desirable position by conforming with the shape of the stand to the external requirements in a particular situation.

According to some embodiments of any of the aspects of the communication system or to some embodiments of the set of equipment, the stand comprises a foot member to which the elongated deformable element is connected or releasably connectable.

The stand may be used similarly as a stand of a desktop lamp.

The elongated deformable element may comprise a first end portion and a second end portion, with the first end portion being releasably connectable to the foot member and the second end portion comprising the holding means.

According to some embodiments of any of the aspects of the communication system or to some embodiments of the set of equipment, the elongated deformable element is deformable such that it at least partially takes on a curved shape and is configured to be hung around a person's neck.

Hanging the elongated deformation element around the neck may then offer the possibility to position the camera close to the user's head, while allowing the user to be hands-free and showing something to the person at the other end of the communication using his or her hands.

According to some embodiments of any of the aspects of the communication system or to some embodiments of the set of equipment, the elongated deformable element has the shape of a hose and has a stiffness to remain in different positions after undergoing different deformations.

According to some embodiments of any of the aspects of the communication system or to some embodiments of the set of equipment, the adapter is configured to be fixed to a person's glasses.

The adapter may comprise a ring-shaped portion that is configured to be slid over a side piece of a pair of glasses and held in place by the glasses.

The adapter may comprise a screwing mechanism to fasten the adapter to a pair of glasses.

According to some embodiments of any of the aspects of the communication system or to some embodiments of the set of equipment, the wearable is a headband holder configured to be worn on a person's head.

This may offer the possibility to position the camera close to the user's head, while allowing the user to be hands-free and showing something to the person at the other end of the communication using his or her hands.

According to some embodiments of any of the aspects of the communication system or to some embodiments of the set of equipment, the configuration is such that the camera unit is functional in a state in which is mated with the holding means and also functional in a state in which is not mated with the holding means. This may allow for switching between face-to-face communication and face-to-first-person-view communication conveniently.

According to some embodiments of any of the aspects of the communication system or to some embodiments of the set of equipment, at least one of the components of the communication system is configured to be battery-driven.

The camera unit may be configured to be powered by a first battery, and wherein another component is configured to be powered by a second battery.

Some embodiments of any of the aspects of the communication system comprise the communication device, the camera unit, the wearable. Some embodiments further comprise the stand and/or the adapter. Moreover, some embodiments comprise more than component of a particular type, such as, e.g., two stands and/or adapters.

Some aspects of the present disclosure relate to a method of operating a communication system in accordance with any one or several of the aspects / embodiments described above.

The method may be performed together with a remote server system.

The remote server system may comprise one or several servers, and the one or several servers may be located in one or several different physical locations.

The method may comprise the steps of enabling a user to enter a call request with an operation effected to the input unit, optionally with a one-touch operation effected to a touch screen, sending a call request message from the communication system to the remote server system, upon having received an entry of a call request, and sending one or several answering request messages from the remote server system to one or several remote communication devices, such as mobile phones, upon having received a call request message from the communication system.

According to some embodiments, the method comprises the steps of providing a closed operating environment for a user on the communication device allowing for executing a limited predetermined number of functions; and enabling an administrator to change the closed operating environment remotely using the remote server by adding or removing functions from the closed operating environment.

The closed operating environment is to be understood as an operating environment offering a limited number of functions, so that the amount of information which the person with an impairment is to handle, is limited. For example, this environment may allow viewing something (e.g., photos pinned to the home screen), calling someone (e.g., a limited number of users belonging to a predefined group of people providing remote assistance, such as selected family members, selected friends, and/or one or several users associated with a care provider, a medical doctor, a service provider, and the like).

The enabling of the administrator to change the closed operating environment using the remote server may comprise enabling the change to take place by operating one or several servers comprised by the remote server, and/or it may comprise effecting the change using a different device that communicates with the remote server. For example, the administrator may use a computer, a smart phone, a tablet, and the like, in order to (via the remote server) effect a change to the closed operating environment. In so far, the environment is open for change by the administrator, and the environment may be changed. It will after the change be a new closed environment for the user of the communication system (e.g., as a new function has been added or a function had been removed). The administrator may be an IT expert operating the server system, or a family member, or a relative, or a care giver, etc.

For example, the administrator may be a grandchild of an elderly parent that poses photos to be viewed on the screen of the communication device. Another example is that an administrator (e.g., a caregiver) adds an icon that starts a menu to call a service to come and pick up washing at the person's home and/or deliver food and/or pick up garbage. This way, the closed environment may be adapted to the specific needs of the person with an impairment. Moreover, the administrator may, e.g., be a relative or a friend or a caregiver adding or removing people from the group of people that can be reached with the communication system for audio or video calling.

The possibility for an administrator to change the closed operating environment may in particular allow to adapt the level of complexity to the user's (perceived) abilities. For example, if an impaired person encounters major difficulties, for example, in operating electronical devices, the complexity can be set to be as low as having just a single button on the start screen, the pressing of said single button initiating the sending of the call request message. If the user's ability is somewhat higher, but not a lot, then the start screen may, for example, include the mentioned button, as well as one additional button for accessing additional functions. If the user's abilities are reasonably higher, then the start screen can accordingly be set up to be more complex. The complexity of the screen can also be kept very low (e.g., showing only a single button) and be increasing slowly as a user's familiarity with the system increases. An optional add-on may be a time display. The time display can be added or withdrawn, depending on the desired complexity of the start screen's makeup.

According to some embodiments, the method comprises the steps of enabling a user to remotely predetermine one or several groups of contacts using the server system. The answering request messages are sent to the one or several contacts of one or several predetermined groups by the server system upon receiving a call request message from the communication system.

For example, the group of contacts may involve a child, a sibling, a parent, a friend, a caregiver, a doctor, and the like. The group can consist of two or three or more contacts.

It may offer particular simplicity and convenience if the person with an impairment can just touch a screen once, in order to trigger contact request messages being delivered to each and every one of the predefined group of contacts. This may maximize the chance of a swift reaction in terms of engaging in a conversation with the person with an impairment.

According to some embodiments, the answering request messages to one or several contacts are disabled when a user reacts to the respective answering request message by accepting to engage in a call between a remote communication device and the communication system via the remote server.

The disabling the answering request message may imply deleting the message so that the respective contact will not have an opportunity to take notice of the request later on, if she/he has not done so yet already.

However, alternatively, for some embodiments, the disabling of the answering request message does not need to imply deleting it, but may just involve a change of status of the message. For example, the ongoing seeking of attention (e.g., by a ringing sound on a contact's smart phone) may cease, but the request may still be visible later on. Alternatively, the answering request message may, e.g., involve periodic attention gaining mechanisms such as audible sounds and/or the phone ringing periodically, and these periodic attention gaining mechanisms may be stopped once the request has been answered by a contact, and communication has been started between the person with an impairment and at least one contact.

Alternatively, all contacts may stay part of the loop and may, e.g., even be automatically part of a call once started.

According to some embodiments, the answering request message is selected from the group consisting of: a text and/or voice messaging system to be sent to a communication device, such as a mobile phone, a tablet, or a computer; an incoming call request to be sent to a communication device, such as a mobile phone, a tablet, or a computer; a text message including a link that leads directly to a call surrounding to which the communication system is connected or connectable.

According to some embodiments, the method comprises the step of sending the request message from the communication system to the remote server upon a one touch operation via a touch screen of the communication device.

This may allow a person with an impairment to use the communication system very conveniently and efficiently, as no deblocking or any form of other operation is necessary to request assistance.

According to some embodiments, the method comprises the step of enabling a user to remotely perform programming and/or maintenance of the communication system via the server system.

The enabling of letting a user to do something hereabove (the different enabling steps described) are to be understood as offering the option of inputting instructions by the user and of processing the instructions in triggering a next step (a guided user-machine interaction).

According to some embodiments, the communication system is configured to signal an approval request message to the user of the communication system upon a remote user initiating a starting operation for programming or maintenance of the communication system remotely, wherein the programming or maintenance is prevented from proceeding until the user of the communication system performs an operation that indicates approval in response to the approval request message.

According to some embodiments, the remote server system enables a user to designate rights to external users to configure certain features of the closed operating environment of the communication system.

For example, an administrator may ascribe the right to a grandchild to post photos (or, e.g., a limited number of photos) on the screen that can be viewed by a grandparent using the communication system, but not allow the grandchild to delete functions (such as the food service call function) from the closed operating environment presented to the user with an impairment on the screen of the communication device.

The present disclosure also relates to a data carrier storing or several data carriers together storing a program that, when run on the processing unit of the communication device of the communication system of any one or several of the aspects / embodiments (either alone or in conjunction with a remote server system) described above, is configured to cause the processing unit and, optionally, the server system, to carry out the method steps of any one of the aspects and/or embodiments described above.

In other words, the data carrier may comprise software stored there on to run the communication system. It may comprise software thereon to run the communication system and the remote server system working together with the communication system. It may comprise software for running other devices communicating with the remote server and, via the remote server, with the communication system.

Additional advantages and features of the present disclosure, that can be realized on their own or in combination with one or several features discussed above, insofar as the features do not contradict each other, will become apparent from the following description of particular embodiments.

### Brief Description of the Drawings

For a better understanding of the present disclosure and to show how the same may be carried into effect, reference will now be made, by way of example only, to the accompanying drawings, in which:
The description is given with reference to the accompanying drawings, in which:
- Fig. 1: is a perspective view of an embodiment of a communication system in accordance with the present disclosure;
- Fig. 2A: is a front view of an embodiment of a communication system in accordance with the present disclosure;
- Fig. 2B: shows an adapter forming part of an embodiment of a communication system or a set of equipment in accordance with the present disclosure;
- Fig. 2C: shows a wearable forming part of an embodiment of a communication system or a set of equipment in accordance with the present disclosure;
- Fig. 3A: shows an operating screen of a communication system in accordance with the present disclosure;
- Fig. 3B: shows an operating screen of a communication system in accordance with the present disclosure.

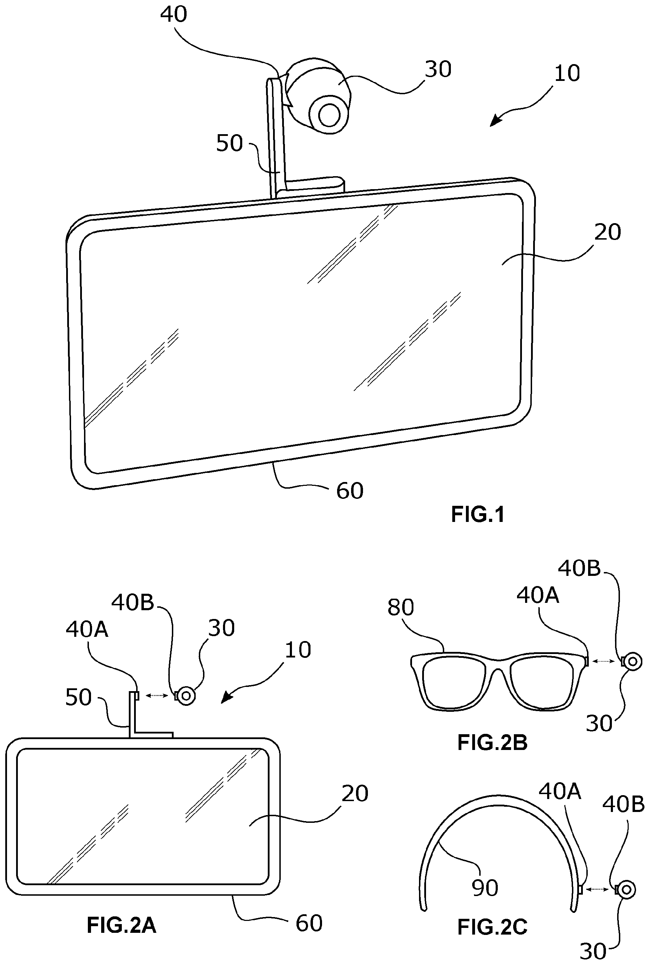

Fig. 1 is a perspective view of an embodiment of a communication system in accordance with the present disclosure.

The communication system 10 is for providing a person, such as a person with an impairment, an elderly, or handicapped person, with remote assistance. The communication system 10 comprises a communication device 60. In this case, the communication device 60 is portable and may have outer resemblance with a smart tablet. However, it is a component of a very specifically designed communication system 10.

The communication device 60 comprises a loudspeaker for outputting audio and a microphone for receiving audio input from the user. Moreover, the communication device 60 comprises a touch screen 20 which also allows the user to enter commands.

The communication device 60 further comprises a network unit (not shown) such that the communication device 60 can communicate. In the case of the embodiment of Fig. 1, the network unit is internet compatible in the sense that communication is enabled via the internet.

The communication device 60 further comprises a memory unit (not shown) for storing an operating system, and a data processing unit (not shown).

The communication device 60 is configured to communicate with a remote server system and configured to support video calls via the remote server system. A remote person can be displayed on the touch screen 20 to the users during a video call.

The communication system 10 comprises a camera unit 30 which is structurally separate from the communication device 20.

In the case of the embodiment of Fig. 1, the camera unit 30 is connected to the communication 20 by cable and is not detachable. However, there are other embodiments, wherein the connection is established in a wireless manner, as well as embodiments in which the cable is detachable. The non-detachable cable connection may have the advantage of not enabling a person with an impairment to separate the camera unit 30 completely from the communication device 20 and from, e.g., loosing or forgetting one part etc.

The communication system 10 comprises a stand 50. The camera unit 30 comprises a magnetic coupling means, and the stand 50 comprises a magnetic counterpart that together can be coupled to form a coupling 40 held together by a magnetic force. This allows a user to very conveniently attach the camera unit 40 to the stand 50 or to separate it therefrom and place it somewhere else.

The communication device 60 can be held by the stand 50, so that when the communication device 60 is held by the stand 50, and when the camera unit 30 is attached by virtue of the coupling 40, a face-to-face video call is possible.

However, as soon as the person with an impairment (e.g., an elderly person) wants to share a first-person point of view with the person at the other end, the camera unit 30 can be simply detached and placed at a different position.

Fig. 2A shows an embodiment of a communication system 10 comprising a communication device 60 with touch screen 20 and with a stand 50 and an adapter 30. The stand 50 is provided with a magnetic part 40A to which the adapter 30 can be magnetically coupled with a magnetic counterpart 40B. When the adapter 30 is coupled to the stand 50, the camera unit 30 (e.g., the camera unit 30 of Fig. 1) can be coupled with the stand 50 via the adapter 30. In other words, the adapter 30 turns a position into a docking position for the camera unit 20 configured for very easy one-move-attachment and detachment.

The adapter 30 with the magnetic counterpart 40B can also be coupled with a pair of glasses 80, as shown in Fig. 2B. The pair of glasses 40A may be provided with a magnetic part 40A that is itself an adapter, such as, e.g., a little ring-like object that can be fastened to a holder of a pair of glasses and that comprises the magnetic part 40A.

In the case of other embodiments, a one piece adapter to which a camera unit can be directly coupled may be fit to a pair of glasses.

The adapter 30 with the magnetic counterpart 40B may also be fit to the magnetic part 40A of a wearable 90. The wearable 90 can be worn as a headband. This may be particularly convenient for the person with an impairment, to be able to fit the camera unit 20 near the own head, in order to be able to share a first-person view on a situation. The user can conveniently switch back and forth between this first-person view and other views during a conversation with a remote person.

The wearable 90 is shape-deformable but remains substantively in a particular shape after being deformed by the user. It can thus be made substantially straight and used like a stand (e.g., mounted to a socket) or it can be used as a wearable to be put around the user's neck (in a shape shown in Fig. 2C) or around an arm, or it can be worn as a hairband.

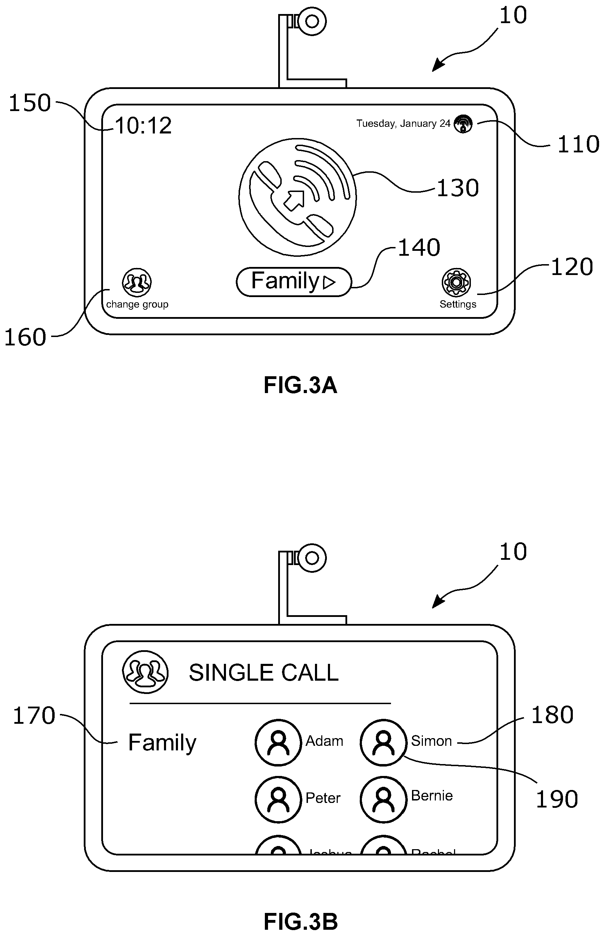

Fig. 3A shows a touch screen of an embodiment of a communication system. On the home screen of this embodiment, there is a time display 150, a date display 110, a one-touch call button 130, a display of the activated group 140, a change group button 160, as well as a settings button 120. This set of functions defines the home screen of a closed operation environment presented to the person with an impairment using the communication system. Functions can be added or removed by a remotely located person via a remote server system through which communication takes place.

Using the call button 130 will trigger the sending of an answer request message to all of the members of the currently active group. In this case, the group "family" is activated. All of the predetermined members of this group will thus be contacted (e.g., by their phones ringing). As soon as one of them responds, a video call starts between the person using the communication system 10 and the person who responded.

In the case of this embodiment, as soon as the user presses the call button 130, the screen transforms to the state shown in Fig. 3B. A call is now activated from the viewpoint of the person using the communication system 10. The group consists of predefined members. In the present case, these group members are called Adam, Simon, Peter, Bernie, Joshua, and Rachel. As soon as one of them will respond to the answer request message, their face will appear on the screen in the video call.

By pressing the button 160 on the screen shown in Fig. 3A, the user can change the group, e.g., from "family" to "caregiver". The caregiver group will then be active, and pressing the call button will call the entire group of predefined members of the caregiver group.

Also further groups can be defined, such as, for example, friends, or food delivery services, goods pickup services, etc. The setup of the closed operating environment is embodiment-specific and can be adapted to the specific needs of a particular person with an impairment. For example, when a grandparent uses the communication system, a functionality can be provided such as letting grandchildren post photos on the home screen. These photos then are shown on the background of the home screen. This way, the communication system can be set up to give a person with an impairment the feeling of being involved and up-to-date real time, rather than being left out and isolated, even if the person does not have the capacity to operate a computer, a smart phone, or a conventional tablet.

The following numbered items relate to embodiments in accordance with the present disclosure:
1. A communication system for providing a person, such as a person with an impairment, an elderly, or handicapped person, with remote assistance,
   the communication system comprising:
   a communication device, optionally a portable communication device, comprising an audio output unit, an input unit for receiving user commands, a microphone, a display unit, such as a touch screen, a network unit, a memory unit for storing an operating system, and a data processing unit, the communication device being configured to communicate with a remote server system and configured to support video calls via the remote server system;
   a camera unit, wherein the camera unit and the communication device are structurally separate entities, the camera unit being connected or connectable to the communication device in a wireless manner or by wire; and
   at least one item selected from the group consisting of a wearable, an adapter for being attached to a wearable and/or the human body, and a stand; the at least one item comprising a holding means;
   wherein the camera unit comprises a coupling means for being releasably coupled to the holding means, the coupling means and the holding means being configured to be releasably mated for holding the camera unit attached to the holding means.
2. A communication system for providing a person, such as an elderly or handicapped person, with remote assistance,
   the communication system comprising:
   a communication device, optionally a portable communication device, comprising an audio output unit, an input unit for receiving user commands, a microphone, a display unit, such as a touch screen, a network unit, a memory unit for storing an operating system, and a data processing unit, the communication device being configured to communicate with a remote server system and configured to support video calls via the remote server system;
   a camera unit, wherein the camera unit and the communication device are structurally separate entities, the camera unit being connected or connectable to the communication device in a wireless manner or by wire; and
   wherein the communication device comprises a holding means and the camera comprises a coupling means for being releasably coupled to the holding means, the coupling means and the holding means being configured to be releasably mated for holding the camera unit attached to the holding means.
3. The communication system according to item 1 or 2, wherein the camera unit and the communication device are configured to communicate via wire or via wireless connection, such as wi-fi or Bluetooth.
4. A set of equipment for a communication system for providing a person, such as an elderly or handicapped person, with remote assistance,
   the set of equipment comprising:
   a camera unit that is configured to be connected to a structurally separate communication device in a wireless manner or by wire; and
   at least one item selected from the group consisting of a wearable, an adapter for being attached to a wearable and/or the human body, and a stand; the at least one item comprising a holding means;
   wherein the camera unit comprises a coupling means for being releasably coupled to the holding means, the coupling means and the holding means being configured to be releasably mated for holding the camera unit attached to the holding means.
5. The communication system or set of equipment of any one of the preceding items,
   Comprising a set of docking components,
   wherein each component of the set of docking components comprises a holding means that is configured to be releasably coupled with the coupling means of the camera unit for holding the camera unit attached to the holding means,
   wherein the holding means of all of the components are structurally compatible in the sense that the camera unit is alternatively releasably mated with any one of the holding means,
   the set of docking components comprising at least two items selected from the list consisting of: the communication device, the wearable, the adapter, and the stand.
6. The communication system or set of equipment according to any one of the preceding items, wherein the coupling means is configured to be releasably coupled to the holding means by a mechanical engagement, such as a clipping engagement, a frictional engagement, and/or threaded engagement.
7. The communication system or set of equipment according to any one of the preceding items, wherein one of the coupling means and the holding means comprises a magnetic part and the other one of the coupling means and the holding means comprises a magnetic counterpart, wherein the magnetic part and the magnetic counterpart are configured to be held together by a magnetic force.
8. The communication system or set of equipment according to item 7, wherein the magnetic part and the magnetic counterpart are configured such that only one or only two mutual coupling orientations with respect to one another are possible. (by utilizing alternating pole orientations of the respective magnet-pairs)
9. The communication system or set of equipment according to any one of the preceding items, wherein the stand comprises an elongated deformable element configured to be shape-deformed to change the position of the holding means relative to other parts of the stand.
10. The communication system or set of equipment according to item 9, wherein the stand comprises a foot member to which the elongated deformable element is connected or releasably connectable, wherein the elongated deformable element may comprise a first end portion and a second end portion, with the first end portion being releasably connectable to the foot member and the second end portion comprising the holding means.
11. The communication system or set of equipment according to item 9 or 10, wherein the elongated deformable element is deformable such that it at least partially takes on a curved shape and is configured to be hung around a person's neck.
12. The communication system or set of equipment according to any one of items 9 to 11, wherein the elongated deformable element has the shape of a hose and has a stiffness to remain in different positions after undergoing different deformations.
13. The communication system or set of equipment according to any one of the preceding items, wherein the adapter is configured to be fixed to a person's glasses, the adapter optionally comprising a ring-shaped portion that is configured to be slipped over a side piece of a pair of glasses, the adapter optionally comprising a screwing mechanism to fasten the adapter to a pair of glasses.
14. The communication system or set of equipment according to any one of the preceding items, wherein the wearable is a headband holder configured to be worn on a person's head.
15. The communication system or set of equipment according to any one of the preceding items, wherein the camera unit is functional in a state in which is mated with the holding means and also functional in a state in which is not mated with the holding means.
16. The communication system or set of equipment according to any one of the preceding items, wherein at least one of the components of the communication system is configured to be battery-driven, wherein, optionally, the camera unit is configured to be powered by a first battery and wherein another component is configured to be powered by a second battery.
17 The communication system according to any one of the preceding items, comprising the communication device, the camera unit, the wearable, and optionally the stand and/or optionally the adapter.
18. A method of operating a communication system of any one of items 1 to 17, optionally together with a remote server system, the method comprising the steps of:
   - enabling a user to enter a call request with an operation effected to the input unit, optionally with a one-touch operation effected to the touch screen;
   - sending a call request message from the communication system to the remote server system, upon having received an entry of a call request;
   - sending one or several answering request messages from the remote server system to one or several remote communication devices, such as mobile phones, upon having received a call request message from the communication system.
19. The method of operating a communication system of item 18, comprising the steps of:
   - providing a closed operating environment for a user on the communication device allowing for executing a limited predetermined number of functions; and
   - enabling an administrator to change the closed operating environment remotely using the remote server by adding or removing functions from the closed operating environment.
20. The method of operating a communication system of item 18 or 19, comprising the steps of:
   - enabling a user to remotely predetermine one or several groups of contacts using the server system;
   - wherein the answering request messages are sent to the one or several contacts of one or several predetermined groups by the server system upon receiving a call request message from the communication system.
21. The method of operating a communication system of item 20, wherein the answering request messages to one or several contacts are disabled when a user reacts to the respective answering request message by accepting to engage in a call between a remote communication device and the communication system via the remote server.
22. The method of operating a communication system of any one of items 18 to 21, wherein the answering request message is selected from the group consisting of: a text and/or voice messaging system to be sent to a communication device, such as a mobile phone, a tablet, or a computer; an incoming call request to be sent to a communication device, such as a mobile phone, a tablet, or a computer; a text message including a link that leads directly to a call surrounding to which the communication system is connected or connectable.
23. The method of operating a communication system of any one of items 18 to 22, comprising the step of:
   sending the request message from the communication system to the remote server upon a one touch operation via a touch screen of the communication device.
24. The method of operating a communication system of any one of items 18 to 23, comprising the step of:
   enabling a user to remotely perform programming and/or maintenance of the communication system via the server system.
25. The method of operating a communication system of any one of items 18 to 24,
   wherein the communication system is configured to signal an approval request message to the user of the communication system upon a remote user initiating a starting operation for programming or maintenance of the communication system remotely, and
   wherein the programming or maintenance is prevented from proceeding until the user of the communication system performs an operation that indicates approval in response to the approval request message.
26. The method of operating a communication system of any one of items 18 to 25, wherein the remote server system enables a user to designate rights to external users to configure certain features of the closed operating environment of the communication system.
27. A data carrier storing or several data carriers together storing a program that, when run on the processing unit of the communication device of the communication system of any one of items 1 to 17, optionally, a remote server system, is configured to cause the processing unit and, optionally, the server system, to carry out the method steps of any one of claims 18 to 26.

It will be apparent to those skilled in the art that various modifications and variations can be made in the disclosed devices and systems without departing from the scope of the disclosure. Other aspects of the disclosure will be apparent to those skilled in the art from consideration of the specification and practice of the features disclosed herein. It is intended that the specification and examples be considered as exemplary only. Many additional variations and modifications are possible and are understood to fall within the framework of the disclosure.

## Claims

1. A communication system for providing a person, such as a person with an impairment, an elderly, or handicapped person, with remote assistance,
the communication system comprising:
a communication device, optionally a portable communication device, comprising an audio output unit, an input unit for receiving user commands, a microphone, a display unit, such as a touch screen, a network unit, a memory unit for storing an operating system, and a data processing unit, the communication device being configured to communicate with a remote server system and configured to support video calls via the remote server system;
a camera unit, wherein the camera unit and the communication device are structurally separate entities, the camera unit being connected or connectable to the communication device in a wireless manner or by wire; and
at least one item selected from the group consisting of a wearable, an adapter for being attached to a wearable and/or the human body, and a stand; the at least one item comprising a holding means;
wherein the camera unit comprises a coupling means for being releasably coupled to the holding means, the coupling means and the holding means being configured to be releasably mated for holding the camera unit attached to the holding means.

2. A communication system for providing a person, such as an elderly or handicapped person, with remote assistance,
the communication system comprising:
a communication device, optionally a portable communication device, comprising an audio output unit, an input unit for receiving user commands, a microphone, a display unit, such as a touch screen, a network unit, a memory unit for storing an operating system, and a data processing unit, the communication device being configured to communicate with a remote server system and configured to support video calls via the remote server system;
a camera unit, wherein the camera unit and the communication device are structurally separate entities, the camera unit being connected or connectable to the communication device in a wireless manner or by wire; and
wherein the communication device comprises a holding means and the camera comprises a coupling means for being releasably coupled to the holding means, the coupling means and the holding means being configured to be releasably mated for holding the camera unit attached to the holding means.

3. The communication system according to claim 1 or 2, wherein the camera unit and the communication device are configured to communicate via wire or via wireless connection, such as wi-fi or Bluetooth.

4. A set of equipment for a communication system for providing a person, such as an elderly or handicapped person, with remote assistance,
the set of equipment comprising:
a camera unit that is configured to be connected to a structurally separate communication device in a wireless manner or by wire; and
at least one item selected from the group consisting of a wearable, an adapter for being attached to a wearable and/or the human body, and a stand; the at least one item comprising a holding means;
wherein the camera unit comprises a coupling means for being releasably coupled to the holding means, the coupling means and the holding means being configured to be releasably mated for holding the camera unit attached to the holding means.

5. The communication system or set of equipment of any one of the preceding claims,
Comprising a set of docking components,
wherein each component of the set of docking components comprises a holding means that is configured to be releasably coupled with the coupling means of the camera unit for holding the camera unit attached to the holding means,
wherein the holding means of all of the components are structurally compatible in the sense that the camera unit is alternatively releasably mated with any one of the holding means,
the set of docking components comprising at least two items selected from the list consisting of: the communication device, the wearable, the adapter, and the stand.

6. The communication system or set of equipment according to any one of the preceding claims, wherein the coupling means is configured to be releasably coupled to the holding means by a mechanical engagement, such as a clipping engagement, a frictional engagement, and/or a threaded engagement.

7. The communication system or set of equipment according to any one of the preceding claims, wherein one of the coupling means and the holding means comprises a magnetic part and the other one of the coupling means and the holding means comprises a magnetic counterpart, wherein the magnetic part and the magnetic counterpart are configured to be held together by a magnetic force,
wherein the magnetic part and the magnetic counterpart are optionally configured such that only one or only two mutual coupling orientations with respect to one another are possible.

8. The communication system or set of equipment according to any one of the preceding claims, wherein the stand comprises an elongated deformable element configured to be shape-deformed to change the position of the holding means relative to other parts of the stand,
wherein the stand optionally comprises a foot member to which the elongated deformable element is connected or releasably connectable, wherein the elongated deformable element may comprise a first end portion and a second end portion, with the first end portion being releasably connectable to the foot member and the second end portion comprising the holding means.

9. The communication system or set of equipment according to claim 8,
wherein the elongated deformable element is optionally shape-deformable, such as being deformable to at least partially takes on a curved shape and is configured to be hung around a person's neck, and wherein the elongated deformable element optionally at least partially has the shape of a hose and has a stiffness to remain in different positions after undergoing different deformations.

10. The communication system or set of equipment according to any one of the preceding claims, wherein the adapter is configured to be fixed to a person's glasses, the adapter optionally comprising a ring-shaped portion that is configured to be slid on a side piece of a pair of glasses, the adapter optionally comprising a screwing mechanism to fasten the adapter to a pair of glasses.

11. The communication system or set of equipment according to any one of the preceding claims, wherein the wearable is a headband holder configured to be worn on a person's head.

12. The communication system or set of equipment according to any one of the preceding claims, wherein the camera unit is functional in a state in which is mated with the holding means and also functional in a state in which is not mated with the holding means.

13. The communication system according to any one of the preceding claims, comprising the communication device, the camera unit, the wearable, and optionally the stand and/or optionally the adapter.

14. A method of operating a communication system of any one of claims 1 to 13, optionally together with a remote server system, the method comprising the steps of:
- enabling a user to enter a call request with an operation effected to the input unit, optionally with a one-touch operation effected to the touch screen;
- sending a call request message from the communication system to the remote server system, upon having received an entry of a call request;
- sending one or several answering request messages from the remote server system to one or several remote communication devices, such as mobile phones, upon having received a call request message from the communication system.

15. A data carrier storing or several data carriers together storing a program that, when run on the processing unit of the communication device of the communication system of any one of claims 1 to 13, optionally, a remote server system, is configured to cause the processing unit and, optionally, the server system, to carry out the method steps of claim 14.
